# EUROPEAN PATENT SPECIFICATION

(11) **EP 4 115 093 B1**
(45) Date of publication and mention of the grant of the patent: **22.07.2026**
(21) Application number: 21710438.9
(22) Date of filing: 04.03.2021
(51) Int. Cl.: F16B 7/04

(54) **WIND BRACE BAND CONNECTOR AND SYSTEM**
WINDSTÜTZBANDVERBINDER UND SYSTEM
RACCORD DE BANDE DE CONTREVENTEMENT ET SYSTÈME

(30) Priority: 04.03.2020 DK PA202000293
(43) Date of publication of application: 11.01.2023
(73) Proprietor: Simpson Strong-Tie A/S, 8300 Odder (DK)
(72) Inventor: FREDERIKSEN, Henrik, 8300 Odder (DK); HANSEN, Jacob, 8300 Odder (DK)
(74) Representative: Fuchs Patentanwälte Partnerschaft mbB
(86) International application number: PCT/EP2021/055522
(87) International publication number: WO 2021/176020

(56) References cited:
- EP-A1- 3 255 217
- WO-A1-2007/137583
- FR-A1- 2 773 832
- FR-B1- 2 773 832
- GB-A- 2 481 908
- JP-A- H08 277 588
- US-A1- 2010 043 315
- GH BAUBESCHLÄGE GMBH: "Innovationen im Holzbau Preis- und Produktübersicht 2018/19", 31 December 2019 (2019-12-31), pages 86 - 86, XP055806103, Retrieved from the Internet <URL:https://www.holzverbinder.de/katalog_bl/DE/files/downloads/GH_Produktkatalog_DE.pdf> [retrieved on 20210520]

## Description

The present invention relates to a wind brace band connector and system comprising at least a first and a second one-piece connector element for connecting at least one perforated band, having and defining a longitudinal band axis, to a connection bracket attached to a building, or for connecting at least two perforated bands with each other, each connector element having a thickness. The present invention also relates to a wind brace connector assembly system for connecting a perforated band to a building.

Connecting the perforated band in order to achieve the desired length needs to be carried out during the actual installation of the perforated band. Due to the weight of the perforated band, it is not convenient just to have longer bands, and hence they often need to be extended. Due to a limited flexibility of the perforated bands, the worker often needs to perform the connection of the bands in an inconvenient place e.g. when being situated on top of trusses. When the worker has his focus on the dangerous place e.g. high above the ground where he is working, a number of risks of getting a poor connecting or mounting quality are often seen using traditional connectors such as bolts or rivets. These risks could be the worker forgetting one or more of the necessary bolts or nuts which obviously causes the connection to be weak. Furthermore, the need of multiple tools to perform the connection renders it highly likely that the worker either forgets one or more on the ground necessitating the worker to climb down and up again or dropping one of the tools during the use of it. WO 2007/137583 A1 describes a system and a method for rapid joining of perforated bands and perforated band fittings.

Hence, there is a need for a wind brace connector that is easy to connect to a perforated band i.e. a wind brace strap using no or just a simple tool.

Furthermore, when connecting two perforated bands there is a need for a wind brace connector that minimises the risk of applying a torque to the perforated band and/or the connector itself.

The present invention addressesthe above disadvantages and drawbacks of the prior art. More specifically, the present invention provides an improved wind brace band connector that is simple to use and easy to install.

Furthermore, the present invention provides an improved wind brace band connector which is cheaper to manufacture.

The present invention provides an improved system which is easy to adjust and still provides a torque free connection.

The above considerations, together with numerous other considerations, advantages and features, which will become evident from the below description, are addressed by the present invention. In a first aspect, the present invention provides a wind brace band connector according to claim 1 comprising at least a first and a second one-piece connector element for connecting at least one perforated band defining a longitudinal band axis to a connection bracket attached to a building, or for connecting at least two perforated bands with each other, each connector element having a thickness and comprising:
- a first body section defining:
- a first longitudinal body axis,
- a first body width,
- a rim area of the first body section,
the first body section comprising a number of projecting pins arranged to receive the perforations of the band, the projecting pins identifying a pin side and an opposing non-pin side of the connector element, furthermore the connector element comprises:
- a second body section defining:
- a second longitudinal body axis,
- a second body width,
- a rim area of the second body section,
- a second body width comprising a number of holes arranged in the same pattern as the projecting pins of the first body section,
- the first and second body sections are connected to each other via a common section made of the same piece of material as the first and second body section, wherein, when in use for connecting a perforated band to another perforated band or connector, the pin-side of the first connector element is facing the pin-side of the second connector element and the connector elements are turned 180° in relation to each other.

In this way, the pins of the first connector element and the pins of the second connector element are respectively inserted in the holes of the other connector element i.e. the pins of the first connector element are inserted in the holes of the second connector element and vice versa. In this way, a very strong double shear connection is possible using the exact same shape of the two connector elements.

The pins of the connector elements may registrate the perforated band. Hence, the pins being both registration pins for the perforated band as well as being able to withstand the load from the band.

Moreover, a part of the rim area of the first and/or the second body section may comprise at least one wall section extending substantially perpendicular to the body section(s).

In this way, it is possible that the bracket elements are positioned correctly in relation to each other in the transverse direction i.e. perpendicular to the longitudinal axis. The wall sections may extend at least two times the thickness of the body section i.e. two times the thickness of the connector element. In this way, it is achieved that the wall sections extend substantially the height of both the other connector element as well as the perforated band (wind brace band). The wall sections may extend beyond the height of the pins.

In addition, the wall section may comprise a locking mechanism to lock the connector elements in relation to each other.

In this way, it is possible that the two connector elements are kept fixed in their mutual position when mounted. Hence, the worker needs no bolts or tools for locking the two connector elements together. The locking means may be adapted to make an audible sound when locked. In this way, it is possible for the worker both visually and in an audible way to ensure that the two connector elements are locked together.

Furthermore, the common section may comprise an embossed section. In this way, the rigidity of the connector element is increased.

Also, the number of pins in each bracket element may be at least two. In this way, it is possible that the connector elements are kept in position when connected to a bracket or a further connector element.

Additionally, the pins may project more than two times the thickness of the connector element. In this way, it is possible that the in the mounted situation, the pins extend through the perforated band and furthermore extend fully through the matching holes of the other connector element.

In an embodiment, at least one of the pins is longer than the other pin(s). In this way, it is possible that the at least one pin has sufficient length to be folded and lock the connector elements together.

In an embodiment, the connector elements are made of high strength steel, galvanised steel, high strength galvanised steel or stainless steel. In this way, a strong durable and still lightweight bracket element is possible. Furthermore, the bracket element may be punched, stamped and bent and used with no treatment of the surface after the stamping/punching/bending.

In an embodiment, the connector element may be made as a monolithic whole. In this way, no welding or other assembly is needed.

The present invention further relates to a wind brace connector assembly system for connecting a perforated band to a building, the wind brace connector assembly comprising a bracket connected to a structure of a building and a first and a second connector element, wherein the bracket comprises bracket holes adapted to receive the pins of a connector element and wherein the connector elements in the mounted state in the one end clamps around a section of the bracket and the other end clamps around a perforated band.

In this way, it is possible that the perforated band i.e. a wind brace strap is connected to the bracket without the use of special tools. In an embodiment, no additional parts are necessary i.e. no bolts the like are needed. Hence, the installation is fast and without risks of poor installation.

Furthermore, the bracket may comprise elongate bracket holes.

In this way, it is possible to adjust the position of the connector elements in relation to the bracket. Hence, it is possible to achieve a more direct load on the bracket from the perforated band via the connector element.

In addition, the centreline of the elongate bracket holes may be curved.

In this way, it is possible to adjust the load direction by rotation and still maintain a predetermined load distribution form the connector elements i.e. the perforated band to the bracket.

Also, the bracket may be adapted to receive at pins arranged at two different transverse lines of the connector element.

In this way, a strong connection is possible using more than one pin.

In an embodiment, the area of a hole the one body section may be less than 2-30% larger than the cross-sectional area of the matching pin to this hole i.e. a pin of the other connector element. In this way, it is possible that a firm contact is achieved between the pins and the holes during load. Hence, a more preferred overall load distribution in connection is possible.

The invention and its many advantages will be described in more detail below, by way of example only, with reference to the accompanying schematic drawings, which for the purpose of illustration show some non-limiting embodiments and in which:
Fig. 1A shows a schematic perspective view of a wind brace connector for connecting two perforated bands using to connector elements according to the invention,
Fig. 1B shows a sideview of the wind brace connector shown in Fig. 1A,
Fig. 1C shows an exploded view of the wind brace connector of Fig. 1A,
Fig. 2A - 2B show a wind brace connector system in an exploded view,
Fig. 3A and 3B show the wind brace connector system in mounted state,
Fig. 4 shows the wind brace connector system in two different angles in relation to the bracket, and
Fig. 5 shows a schematic perspective view the wind brace connector system installed on a roof.

All the figures are highly schematic and not necessarily to scale, and they show only those parts which are necessary in order to elucidate the invention, other parts being omitted or merely suggested.

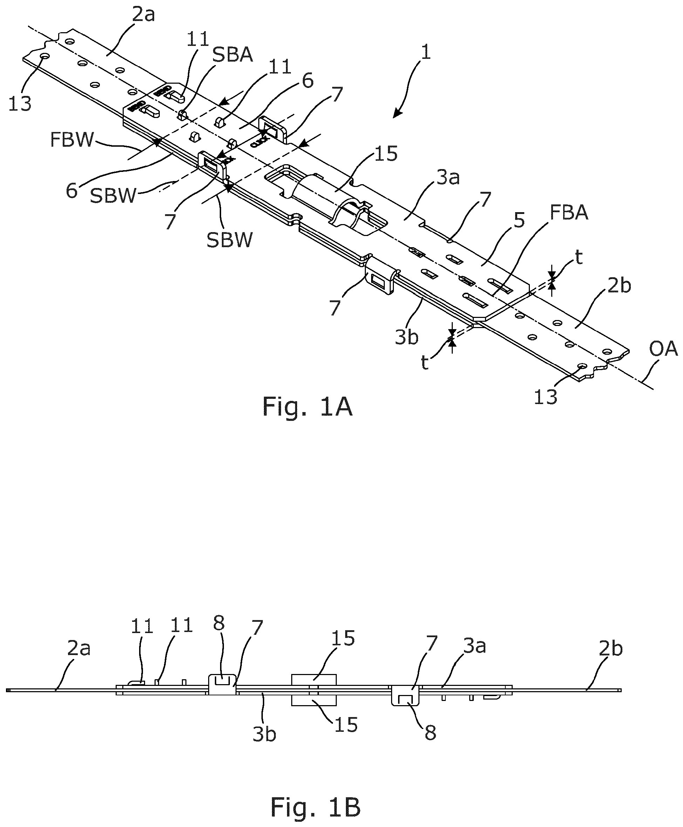

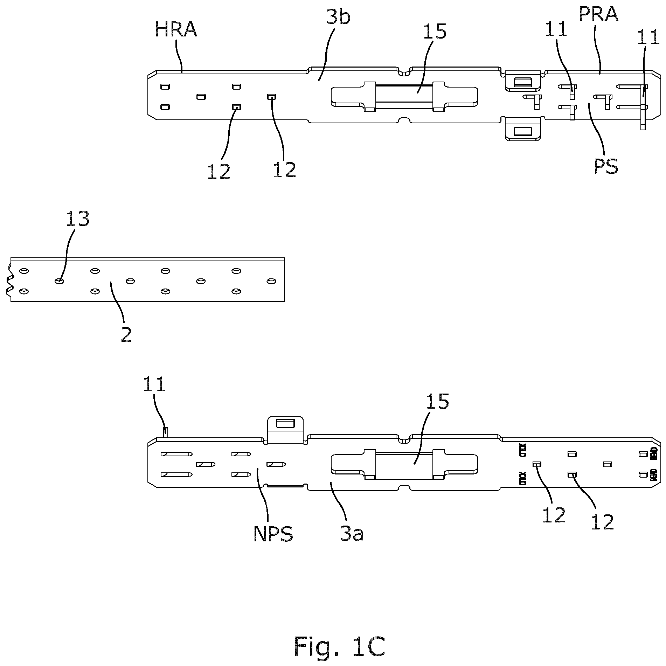

Fig. 1A - 1C shows different views of a wind brace band connector 1 for connecting two perforated bands 2 using to connector elements 3. The wind brace band connector 1 comprises a first connector element 3a and a second connector element 3b (the general reference numeral 3 is used when no distinguishing between the two is necessary). In this embodiment, the band connector 1 is shown connecting two perforated bands 2a and 2b i.e. wind brace bands. Each connector element 3 has a thickness t and defines an overall longitudinal axis OA. The connector elements 3 furthermore comprises a first body section 5 defining a first longitudinal body axis FBA being a part of the overall longitudinal axis OA and a second body section 6 defining a second longitudinal body axis SBA also being part of the overall longitudinal axis OA. Furthermore, a first body width FDW and a second body width SBW are defined perpendicular to the overall longitudinal axis OA. The first body width FBW being smaller than the second body width SBW. In this embodiment, the second body width SBW is defined by the distance between the wall sections 7 and the first body with FBW is capable of being fitted between the two wall sections 7. The first body section 5 defines a rim area PRA at least partly surrounding an area comprising projecting pins 11. The second body section 6 defines a rim area HRA at least partly surrounding an area having holes 12 (best visible in Fig. 1C). The wall sections 7 comprises locking means 8 for locking the two connector elements 3a and 3b to each other.

The pins 11 of the first body section 5 are arranged in a manner capable of being received in the perforations 13 of the band 2.

The projecting pins 11 identify a pin side PS and an opposing non-pin side NPS of the connector element 3. The holes 12 of the second body section 6 are arranged in the same pattern as the perforations 12 of the perforated band 2 and hence the pattern of the pins 11.

The first body section 5 and the second body section 6 of each connector element 3 are connected to each other via a common section 15. The common section 15 is made of the same piece of material as the first and second body sections 5, 6. In this embodiment, the common section 15 has an embossed section for increasing the rigidity of the common section.

It is shown that the connector element 3a and 3b are identical but in the installed situation the one connector element is turned 180° in relation to the other. In this mounted situation, the projecting pins 11 of the one connector element 3 is inserted through the perforations 13 of the perforated band 2 and through the holes 12 of the second body section 6. The longer of the pins acts as registration pins in order to guide the assembly of the two connector elements with the perforated band.

It is furthermore, shown that when in use for connecting a perforated band 2 to another perforated band 2, the pin-side PS of the first connector element 3a is facing the pin-side PS of the second connector element 3b, and the connector elements 3a, 3b are turned 180° in relation to each other. In this way, a strong connection is achieved using two uniform connector elements 3.

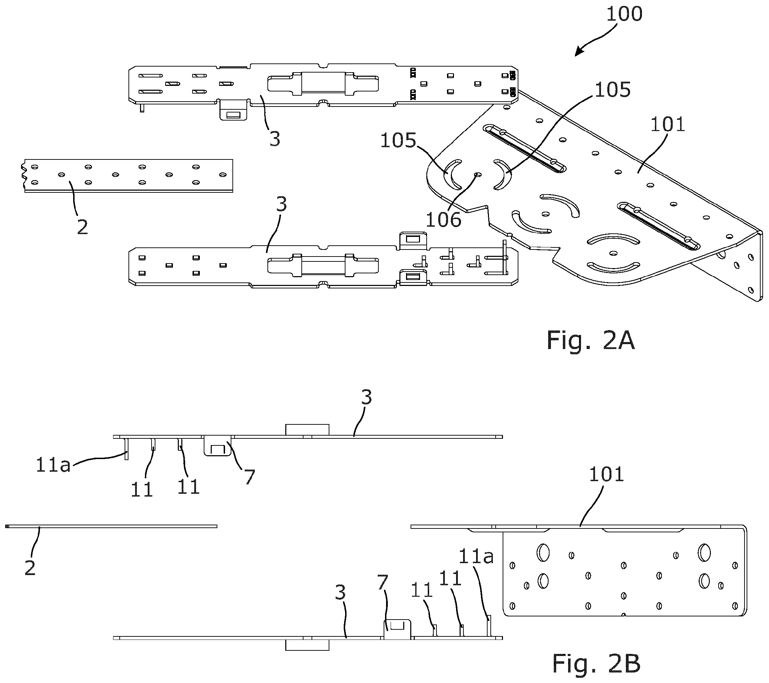

Fig. 2A - 2B show a wind brace connector system 100 in an exploded view. The system comprises a wind brace band connector 1 comprising two connector elements 3 and a bracket 101. The pins 11 of the connector elements 3 and the bracket holes 102 are adapted to hold the same pattern as the perforated band 2. Hence, connecting the connector elements 3 the bracket 101 needs no further adaption of the connector elements 3. In this embodiment, the bracket 101 comprises elongated bracket holes 105. A further centre bracket hole 106 is arranged between the two elongated bracket holes 105. Fig. 2B shows a side view of the exploded view of Fig. 1A. In this view, it is easily visible that the pins 11 are of different length. The longer pins 11a are used as registration pins. In this way, it is easy for the worker to keep the parts i.e. the first and second connector element 3, the bracket 101 and the perforated band 2 in correct position in relation each other during assembling.

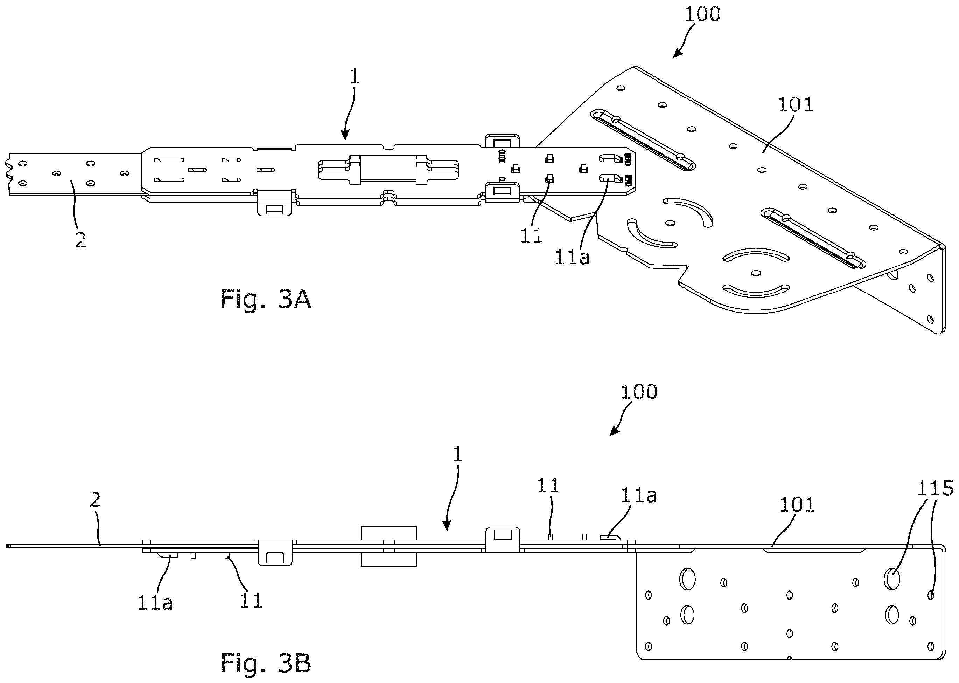

Fig. 3A and 3B show the wind brace connector system 100 in assembled stated i.e. where the perforated band 2 is connected to the bracket 101 by the wind brace band connector 1. It is shown that the longer pins 11a are folded in order to lock the one end of the wind brace band connector 1 to the bracket 101 and to lock the other end of the wind brace band connector 1 to the perforated band 2 (these pins are only visible in Fig. 3B). It is seen that the shorter of the pins 11 are still long enough to project through the other connector element 3. The lengths of the pins 11 are at least twice the material thickness of the connector element 3. It is seen that the bracket 101 further comprises a number of bracket apertures 115 arranged to affix the bracket to a structure e.g. a truss of a building.

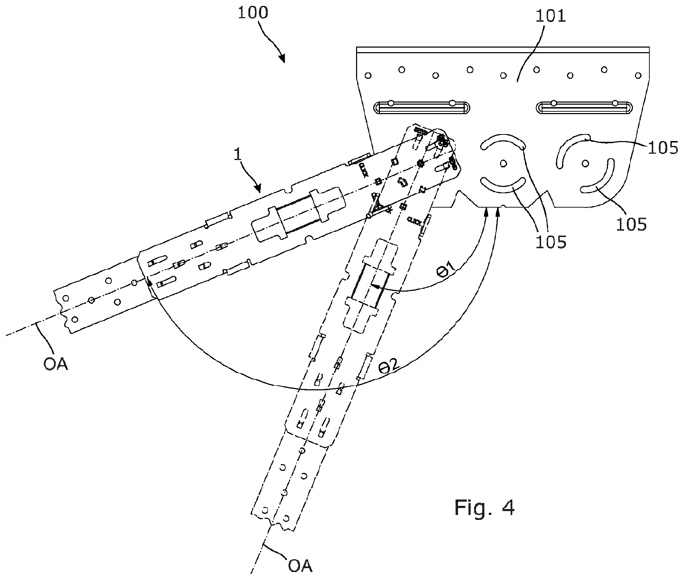

Fig. 4 shows the wind brace connector system 100 where the wind brace band connector 1 is arranged in two different angles in relation to the bracket 101.The angles θ1 and θ2 are in measured from the same surface of the bracket 101 to the overall longitudinal axis OA of the wind brace band connector 1. The difference between the angles θ1 and θ2 substantially show the adjustment capabilities of the system 100 i.e. how much the wind brace band connector 1 may be turned in the elongated bracket holes 105 (seen in Fig. 2A). It is seen that the same bracket 101 may be used for connecting more than one wind brace band connectors 1 or the one wind brace band connector 1 may be connected in different positions according to the specific need.

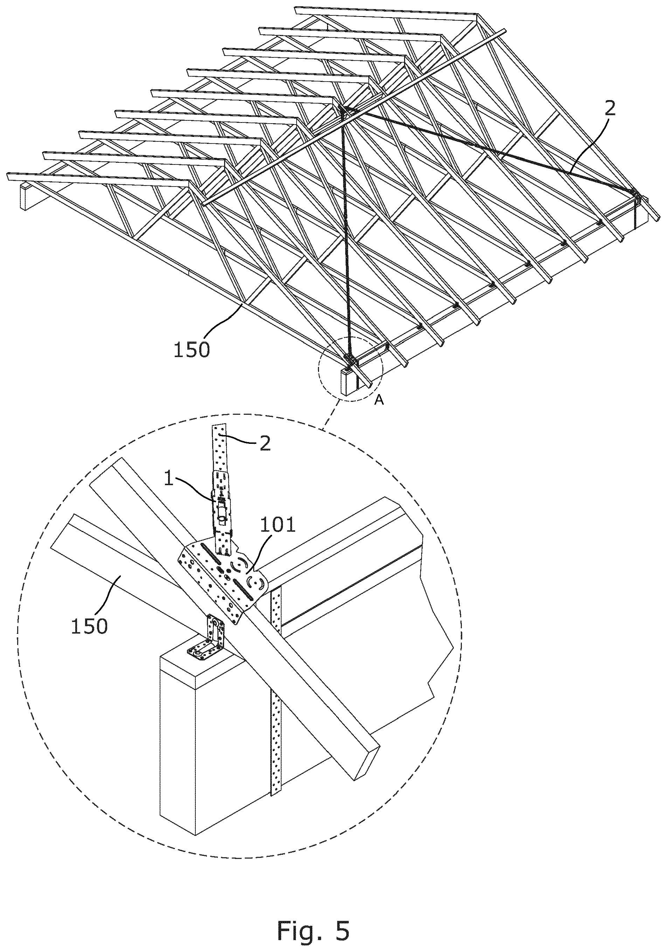

Fig. 5 shows in a perspective view of the wind brace connector system 100 installed on trusses 150 of a roof. The bracket 101 is attached to the truss 150, and the wind brace band connector 1 is connected to the bracket 101. The wind brace band connector 1 is connecting the perforated band 2 and the bracket 101. Having a similar connection in the other end of the perforated band 2 the wind brace connector system 100 support the whole roof structure.

Although the invention has been described in the above in connection with preferred embodiments of the invention, it will be evident for a person skilled in the art that several modifications are conceivable without departing from the invention as defined by the following claims.

## Claims

1. Wind brace band connector (1) comprising at least a first and a second one-piece connector element (3a, 3b, 3) for connecting at least one perforated band (2a, 2b, 2) defining a longitudinal band axis (OA) to a connection bracket (101) attached to a building, or for connecting at least two perforated bands (2a, 2b, 2) with each other, each connector element (3a, 3b, 3) having a thickness (t) and comprising:
- a first body section (5) defining:
- a first longitudinal body axis (FBA),
- a first body width (FBW),
- a rim area (PRA) of the first body section (5),
the first body section (5) comprising a number of projecting pins (11) arranged to receive the perforations (13) of the band (2a, 2b, 2), the projecting pins (11) identifying a pin side (PS) and an opposing non-pin side (NPS) of the connector element (3a, 3b, 3), furthermore the connector element (3a, 3b, 3) comprises:
- a second body section (6) defining:
- a second longitudinal body axis (SBA),
- a second body width (SBW),
- a rim area (HRA) of the second body section (6),
the second body section (6) comprising a number of holes (12) arranged in the same pattern as the projecting pins (11) of the first body section (5),
- the first and second body sections (5, 6) are connected to each other via a common section (15) made of the same piece of material as the first and second body section (5, 6), wherein, when in use for connecting a perforated band (2a, 2b, 2) to another perforated band (2a, 2b, 2) or connector, the pin-side (PS) of the first connector element (3a) is facing the pin-side (PS) of the second connector element (3b) and the connector elements (3a, 3b, 3) are turned 180° in relation to each other.

2. Wind brace band connector (1) according to claim 1, wherein a part of the rim area (PRA, HRA) of the first and/or the second body section (5, 6) comprises at least one wall section (7) extending substantially perpendicular to the body section(s) (5, 6).

3. Wind brace band connector (1) according to claim 1 or 2, wherein the wall section (7) comprises a locking mechanism (8) to lock the connector elements (3a, 3b, 3) in relation to each other.

4. Wind brace band connector (1) according to claim 1, 2 or 3, wherein the common section (15) comprises an embossed section.

5. Wind brace band connector (1) according to any of the preceding claims 1 - 4, wherein the number of pins (11) in each bracket element (3a, 3b, 3) is at least two.

6. Wind brace band connector (1) according to any of the preceding claims 1 - 5, wherein the pins (11) project more than two times the thickness (t) of the connector element (3a, 3b, 3).

7. Wind brace connector assembly system (100) for connecting a perforated band (2a, 2b, 2) to a building, the wind brace connector assembly (100) comprising a bracket (101) for connection, in use, to a structure of a building and a wind brace band connector (1) according to claims 1 - 6, wherein the bracket (101) comprises bracket holes (102) adapted to receive the pins (11) of a connector element (3a, 3b, 3) and wherein the connector elements (3a, 3b, 3) in the mounted state in the one end, in use, clamps around a section of the bracket (101) and the other end, in use, clamps around a perforated band (2a, 2b, 2).

8. Wind brace connector assembly system (100) according to claim 7 wherein the bracket (101) comprises elongate bracket holes (105).

9. Wind brace connector assembly system (100) according to claim 8 wherein the centreline of the elongate bracket holes (105) is curved.

10. Wind brace connector assembly system (100) according to claim 7, 8 or 9 wherein the bracket (101) is adapted to receive pins (11) arranged at two different transverse lines of the connector element (3a, 3b, 3).

## Patentansprüche

1. Windstützbandverbinder (1) mit mindestens einem ersten und einem zweiten einteiligen Verbinderelement (3a, 3b, 3) zum Verbinden mindestens eines perforierten Bandes (2a, 2b, 2), das eine Bandlängsachse (OA) definiert, mit einer an einem Gebäude befestigten Verbindungshalterung (101) oder zum Verbinden von mindestens zwei perforierten Bändern (2a, 2b, 2) miteinander, wobei jedes Verbinderelement (3a, 3b, 3) eine Dicke (t) aufweist und umfasst:
- einen ersten Körperabschnitt (5), der definiert:
- eine erste Körperlängsachse (FBA),
- eine erste Körperbreite (FBW),
- einen Randbereich (PRA) des ersten Körperabschnitts (5),
wobei der erste Körperabschnitt (5) eine Anzahl von vorstehenden Stiften (11) umfasst, die so angeordnet sind, dass sie die Perforationen (13) des Bandes (2a, 2b, 2) aufnehmen, wobei die vorstehenden Stifte (11) eine Stiftseite (PS) und eine gegenüberliegende Nicht-Stiftseite (NPS) des Verbinderelements (3a, 3b, 3) kennzeichnen, wobei das Verbinderelement (3a, 3b, 3) ferner umfasst:
- einen zweiten Körperabschnitt (6), der definiert:
- eine zweite Körperlängsachse (SBA),
- eine zweite Körperbreite (SBW),
- einen Randbereich (HRA) des zweiten Körperabschnitts (6),
wobei der zweite Körperabschnitt (6) eine Anzahl von Löchern (12) umfasst, die in demselben Muster wie die vorstehenden Stifte (11) des ersten Körperabschnitts (5) angeordnet sind,
- wobei der erste und der zweite Körperabschnitt (5, 6) über einen gemeinsamen Abschnitt (15) miteinander verbunden sind, der aus dem gleichen Materialstück wie der erste und der zweite Körperabschnitt (5, 6) hergestellt ist, wobei bei der Verwendung zum Verbinden eines perforierten Bandes (2a, 2b, 2) mit einem anderen perforierten Band (2a, 2b, 2) oder Verbinder die Stiftseite (PS) des ersten Verbinderelements (3a) der Stiftseite (PS) des zweiten Verbinderelements (3b) zugewandt ist und die Verbinderelemente (3a, 3b, 3) um 180° zueinander gedreht sind.

2. Windstützbandverbinder (1) nach Anspruch 1, wobei ein Teil des Randbereichs (PRA, HRA) des ersten und/oder des zweiten Körperabschnitts (5, 6) mindestens einen Wandabschnitt (7) umfasst, der sich im Wesentlichen senkrecht zu dem/den Körperabschnitt(en) (5, 6) erstreckt.

3. Windstützbandverbinder (1) nach Anspruch 1 oder 2, wobei der Wandabschnitt (7) einen Verriegelungsmechanismus (8) zum Verriegeln der Verbinderelemente (3a, 3b, 3) relativ zueinander umfasst.

4. Windstützbandverbinder (1) nach Anspruch 1, 2 oder 3, wobei der gemeinsame Abschnitt (15) einen geprägten Abschnitt umfasst.

5. Windstützbandverbinder (1) nach einem der vorangehenden Ansprüche 1 bis 4, wobei die Anzahl der Stifte (11) in jedem Halterungselement (3a, 3b, 3) mindestens zwei beträgt.

6. Windstützbandverbinder (1) nach einem der vorangehenden Ansprüche 1 bis 5, wobei die Stifte (11) mehr als das Zweifache der Dicke (t) des Verbinderelements (3a, 3b, 3) vorstehen.

7. Windstützverbinderbaugruppensystem (100) zum Verbinden eines perforierten Bandes (2a, 2b, 2) an einem Gebäude, wobei die Windstützverbinderbaugruppe (100) eine Halterung (101) zum Verbinden, bei Verwendung, mit einer Struktur eines Gebäudes, und einen Windstützbandverbinder (1) nach den Ansprüchen 1 bis 6 umfasst, wobei die Halterung (101) Halterungslöcher (102) umfasst, die dazu geeignet sind, die Stifte (11) eines Verbinderelements (3a, 3b, 3) aufzunehmen, und wobei die Verbinderelemente (3a, 3b, 3) im montierten Zustand am einen Ende, bei Verwendung, um einen Abschnitt der Halterung (101) und am anderen Ende, bei Verwendung, um ein perforiertes Band (2a, 2b, 2) klemmen.

8. Windstützverbinderbaugruppensystem (100) nach Anspruch 7, wobei die Halterung (101) längliche Halterungslöcher (105) umfasst.

9. Windstützverbinderbaugruppensystem (100) nach Anspruch 8, wobei die Mittellinie der länglichen Halterungslöcher (105) gekrümmt ist.

10. Windstützverbinderbaugruppensystem (100) gemäß Anspruch 7, 8 oder 9, wobei die Halterung (101) dazu geeignet ist, Stifte (11) aufzunehmen, die an zwei verschiedenen Querlinien des Verbinderelements (3a, 3b, 3) angeordnet sind.

## Revendications

1. Connecteur de bande de contreventement (1) comprenant au moins un premier et un deuxième éléments de connecteur monoblocs (3a, 3b, 3 ) pour connecter au moins une bande perforée (2a, 2b, 2 ) définissant un axe longitudinal de bande (OA) à un support de connexion (101) fixé à un bâtiment, ou pour connecter au moins deux bandes perforées (2a, 2b, 2) l'un à l'autre, chaque élément de raccordement (3a, 3b, 3) ayant une épaisseur (t) et comprenant :
- une première section de corps (5) définissant :
- un premier axe longitudinal de corps (FBA),
- une première largeur de corps (FBW),
- une zone de rebord (PRA) de la première section de corps (5),
la première section de corps (5) comprenant un certain nombre de broches saillantes (11) agencées pour recevoir les perforations (13) de la bande (2a, 2b, 2), les broches saillantes (11) identifiant un côté broche (PS) et un côté opposé sans broche (NPS) de l'élément de connecteur (3a, 3b, 3), l'élément de connecteur (3a, 3b, 3) comprenant en outre :
- une deuxième section de corps (6) définissant :
- un deuxième axe longitudinal de corps (SBA),
- une deuxième largeur de corps (SBW),
- une zone de rebord (HRA) de la deuxième section de corps (6),
la deuxième section de corps (6) comprenant un certain nombre de trous (12) disposés selon le même motif que les broches saillantes (11) de la première section de corps (5),
- les première et deuxième sections de corps (5, 6) sont reliées l'une à l'autre par l'intermédiaire d'une section commune (15) formée du même morceau de matériau que les première et deuxième sections de corps (5, 6), dans laquelle, lorsqu'elle est utilisée pour relier une bande perforée (2a, 2b, 2 ) à une autre bande perforée (2a, 2b, 2 ) ou à un connecteur, le côté broche (PS) du premier élément de connecteur (3a) est en vis-à-vis du côté broche (PS) du deuxième élément de connecteur (3b) et les éléments de connecteur (3a, 3b, 3 ) sont tournés de 180° l'un par rapport à l'autre.

2. Connecteur de bande de contreventement (1) selon la revendication 1, dans lequel une partie de la zone de rebord (PRA, HRA) de la première et/ou de la deuxième section de corps (5, 6) comprend au moins une section de paroi (7) s'étendant sensiblement perpendiculairement à la ou aux sections de corps (5, 6).

3. Connecteur de bande de contreventement (1) selon la revendication 1 ou 2, dans lequel la section de paroi (7) comprend un mécanisme de verrouillage (8) pour verrouiller les éléments de connecteur (3a, 3b, 3) les uns par rapport aux autres.

4. Connecteur de bande de contreventement (1) selon la revendication 1, 2 ou 3, dans lequel la section commune (15) comprend une section embossée.

5. Connecteur de bande de contreventement (1) selon l'une quelconque des revendications 1 à 4 précédentes, dans lequel le nombre de broches (11) dans chaque élément de support (3a, 3b, 3) est d'au moins deux.

6. Connecteur de bande de contreventement (1) selon l'une quelconque des revendications 1 à 5 précédentes, dans lequel les broches (11) dépassent de plus de deux fois l'épaisseur (t) de l'élément de connecteur (3a, 3b, 3).

7. Système d'assemblage de connecteur de contreventement (100) pour connecter une bande perforée (2a, 2b, 2) à un bâtiment, l'assemblage de connecteur de contreventement (100) comprenant un support (101) destiné à être connecté, en utilisation, à une structure d'un bâtiment et un connecteur de bande de contreventement (1) selon les revendications 1 à 6 , dans lequel le support (101) comprend des trous de support (102) adaptés pour recevoir les broches (11) d'un élément de connecteur (3a, 3b, 3) et dans lequel les éléments de connecteur (3a, 3b, 3) à l'état monté, à une extrémité, en utilisation, serrent autour d'une section du support (101) et à l'autre extrémité, en utilisation, serrent autour d'une bande perforée (2a, 2b, 2).

8. Système d'assemblage de connecteur de contreventement (100) selon la revendication 7, dans lequel le support (101) comprend des trous de support allongés (105).

9. Système d'assemblage de connecteur de contreventement (100) selon la revendication 8, dans lequel l'axe central des trous de support allongés (105) est courbé.

10. Système d'assemblage de connecteur de contreventement (100) selon la revendication 7, 8 ou 9, dans lequel le support (101) est adapté pour recevoir des broches (11) disposées sur deux lignes transversales différentes de l'élément de connecteur (3a, 3b, 3).
